## Europäisches Patentamt
## European Patent Office
## Office européen des brevets

(19)

(11) Veröffentlichungsnummer: **0 120 110**
**B1**

(12)

# EUROPÄISCHE PATENTSCHRIFT

(45) Veröffentlichungstag der Patentschrift:
27.08.86

(51) Int. Cl.⁴: **G 01 F 1/32**, G 01 F 1/00

(21) Anmeldenummer: 83103085.3

(22) Anmeldetag: 28.03.83

(54) **Vorrichtung zur Bestimmung eines Volumendurchflusses.**

(43) Veröffentlichungstag der Anmeldung:
03.10.84 Patentblatt 84/40

(45) Bekanntmachung des Hinweises auf die Patenterteilung:
27.08.86 Patentblatt 86/35

(84) Benannte Vertragsstaaten:
FR GB IT

(56) Entgegenhaltungen:
DE - A - 1 473 019
DE - A - 1 904 435
DE - A - 2 028 737
DE - A - 2 029 282
DE - A - 2 029 283
DE - B - 2 028 738
FR - A - 2 339 841

INSTRUMENTS & CONTROL SYSTEMS, Band 33, Seiten 276-280, Chilton Cy., Radnor Pa., USA, J.T. CORTELYOU: "Centrifugal flow measurement"

(73) Patentinhaber: **Fischer & Porter GmbH,
Postfach 1843 Dransfelder Strasse 2,
D-3400 Göttingen 1 (DE)**

(72) Erfinder: **Appel, Eggert, Imbser Weg 1, D-3402 Dransfeld (DE)**
Erfinder: **Kiene, Wilfried, Fuchsberg 33,
D-3510 Hannoversch-Münden 21 (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

## Beschreibung

Die Erfindung betrifft eine Vorrichtung nach dem Oberbegriff des Anspruchs 1.

Vorrichtungen dieser Art sind nach der DE-PS 14 73 019, der CH-PS 453 732, der DE-PS 19 04 435, der DE-PS 2 028 737, der DE-PS 2 028 738, der DE-PS 2 029 282 und der DE-PS 2 029 283 bekannt.

Nach der DE-PS 14 73 019 ist es insbesondere bekannt, in dem Eingangsbereich des Rohrabschnitts Schaufeln mit Leitflächen vorzusehen, die dem Medium eine Wirbelbewegung erteilen. Statt dieser Schaufeln können auch Leitungswindungen innerhalb des Eingangs des Rohrabschnitts vorgesehen sein. Der Querschnitt zwischen den Schaufeln oder der Querschnitt der Leitungswindungen muss häufig so klein gemacht werden, dass er verstopfen kann, wenn das Medium solche Verstopfungen herbeiführendes Material mit sich führt.

Aufgabe der Erfindung ist es, ohne Beeinträchtigung der Messgenauigkeit solche Verstopfungen zu vermeiden.

Die Lösung dieser Aufgabe ist im Kennzeichen des Anspruchs 1 angegeben.

Gegenüber dem Stand der Technik wird dem Medium also schon in der Leitung, die zu dem Rohrabschnitt führt, die gewünschte Wirbelbewegung erteilt. Der Querschnitt dieser Leitung kann verhältnismässig gross sein, bevorzugt gemäss Anspruch 4, so dass die Gefahr einer Verstopfung wesentlich gemindert wird.

Besonders einfach sind Leitungskrümmungen entsprechend Anspruch 2 und 3 auszuführen.

Bei Anwendung der Lehre der Erfindung entfallen selbstverständlich die bekannten Schaufeln oder Leitungswindungen innerhalb des Rohrabschnitts.

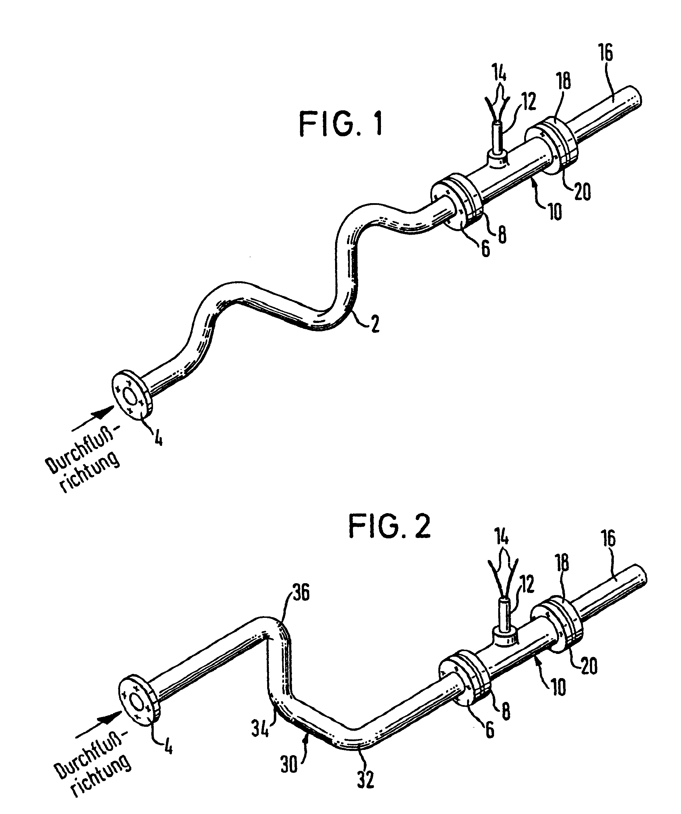

Die Erfindung wird im folgenden an zwei Ausführungsbeispielen unter Hinweis auf die Figuren 1 und 2 erläutert:

Fig. 1 zeigt eine erste Ausführungsform perspektivisch,

Fig. 2 zeigt eine zweite Ausführungsform perspektivisch.

Die Ausführungsform nach Fig. 1 weist eine wendelförmig gekrümmte Leitung 2 auf, die an einem Ende mit einem an einer Zuleitung zu befestigenden Flansch 4 versehen ist und am anderen Ende mit einem Flansch 6, der mit einem Flansch 8 an einem Rohrabschnitt 10 verbunden ist, innerhalb dem die Messung der Präzessionsfrequenz in bekannter Weise mit einem Messfühler 12 durchgeführt wird, der in den Rohrabschnitt 10 hineinragt und über Leitungen 14 in bekannter Weise mit einem Messgerät verbunden ist. Die Ausbildung des Innenraums des Rohrabschnitts und des Messfühlers ist in den eingangs genannten Schriften erörtert.

Es entfallen nur die Schaufeln innerhalb des Rohrabschnitts 10, die dem durch die Leitung 2 zugeführten Medium die erforderliche Wirbelbewegung erteilen.

Bei der Ausführungsform nach Fig. 1 wird dem Medium die Wirbelbewegung dadurch erteilt, dass es die wendelförmige Leitung 2 durchströmt.

Das abströmende Medium wird durch eine Leitung 16 abgeführt, die mit einem Flansch 18 an einen Flansch 20 am Rohrabschnitt 10 angesetzt ist.

Die Ausführungsform nach Fig. 2 unterscheidet sich von derjenigen nach Fig. 1 allein dadurch, dass die Leitung 2 nach Fig. 1 ersetzt ist durch eine Leitung 30, die in drei verschiedenen Ebenen liegende rechtwinklige Krümmer 32, 34, 36 aufweist. Grundsätzlich genügen zwei Krümmer, die in verschiedenen Ebenen liegen, um die gewünschte Wirbelbewegung zu erzeugen.

## Patentansprüche

1. Vorrichtung zur Bestimmung des Volumenstroms eines einem Rohrabschnitt durch eine Leitung zugeführten und diesen Rohrabschnitt durchströmenden Mediums durch Messung der Präzessionsfrequenz eines um die Achse des Rohrabschnitts präzidierenden Wirbels des Mediums, dadurch gekennzeichnet, dass die Leitung (2, 30) zur Erzeugung des Wirbels vor ihrer Mündung im Rohrabschnitt (10) in wenigstens zwei verschiedenen Ebenen gekrümmt ist.

2. Vorrichtung nach Anspruch 1, dadurch gekennzeichnet, dass die Leitung (2) wendelförmig gekrümmt ist.

3. Vorrichtung nach Anspruch 1, dadurch gekennzeichnet, dass die Leitung (30) in wenigstens zwei aufeinanderfolgenden, rechtwinklig aufeinander stehenden Ebenen rechtwinklig gekrümmt ist.

4. Vorrichtung nach Anspruch 1, dadurch gekennzeichnet, dass der Querschnitt der Leitung (2) über ihre Länge von ihrer Mündung in dem Rohrabschnitt (10) wenigstens annähernd gleich dem Einlassquerschnitt des Rohrabschnitts (10) ist.

## Claims

1. Device for determining the volume current of a medium supplied to a pipe section through a conduit and flowing through this pipe section, by measurement of the frequency of precession of an eddy of the medium which precesses about the axis of the pipe section, characterised in that the conduit (2, 30) for the generation of the eddy is curved in at least two different planes before its entry into the pipe section (10).

2. Device according to claim 1, characterised in that the conduit (2) is curved in coil form.

3. Device according to claim 1, characterised in that the conduit (30) is curved at right angles in at least two successive planes standing at right angles to one another.

4. Device according to claim 1, characterised in that the cross-section of the conduit (2), over its length from its entry into the pipe section (10), is at least approximately equal to the inlet cross-section of the pipe section (10).

**Revendications**

1. Dispositif pour déterminer le débit volumétrique d'un fluide amené à une section de tube par une conduite et traversant cette section de tube, par la mesure de la fréquence de la précession d'un tourbillon du fluide qui préside autour de l'axe de la section de tube, caractérisé en ce que la conduite (2, 30) destinée à réaliser le tourbillon est courbée à l'avant de son embouchure dans la section de tube (10) dans au moins deux plans différents.

2. Dispositif selon la revendication 1, caractérisé en ce que la conduite (2) est courbée en forme de spirale.

3. Dispositif selon la revendication 1, caractérisé en ce que la conduite (30) est courbée en formant des angles droits dans au moins deux plans qui sont à angle droit l'un par rapport à l'autre.

4. Dispositif selon la revendication 1, caractérisé en ce que la section transversale de la conduite (2) est approximativement au moins égale à la section transversale d'entrée de la section de tube (10) sur la longueur de son embouchure dans la section de tube (10).

# FIG. 1

# FIG. 2